# EUROPEAN PATENT SPECIFICATION

(11) **EP 2 538 472 B1**
(45) Date of publication and mention of the grant of the patent: **29.03.2017**
(21) Application number: 10845754.0
(22) Date of filing: 15.02.2010
(51) Int. Cl.: H01M 2/22, H01M 2/32, H01M 2/20, B32B 15/01, B23K 35/30, B23K 11/20, C22C 38/08, H01M 10/46

(54) **CLADDING MATERIAL FOR LEADS AND METHOD OF WELDING CLADDING MATERIAL FOR LEADS**
VERKLEIDUNGSMATERIAL FÜR ZULEITUNGEN UND VERFAHREN ZUM SCHWEISSEN VON VERKLEIDUNGSMATERIAL FÜR ZULEITUNGEN
MATIÈRE DE GAINE POUR FILS ET PROCÉDÉ DE SOUDAGE DE MATIÈRE DE GAINE POUR FILS

(43) Date of publication of application: 26.12.2012
(73) Proprietor: Hitachi Metals, Ltd., Tokyo 108-8224 (JP)
(72) Inventor: ODA, Yoshimitsu, Suita-shi Osaka 564-0043 (JP); ISHIO, Masaaki, Suita-shi Osaka 564-0043 (JP)
(74) Representative: Hoffmann Eitle
(86) International application number: PCT/JP2010/052182
(87) International publication number: WO 2011/099160

(56) References cited:
- EP-A1- 0 945 209
- JP-A- 07 299 592
- JP-A- 61 118 962
- JP-A- 2000 164 194
- JP-A- 2003 019 569
- JP-A- 2007 035 650
- US-A- 4 737 418
- US-A1- 2004 048 096
- US-A1- 2007 037 054

## Description

### Technical Field

The present invention relates to a lead of a cladding material and welded to a battery terminal, and to a method of welding a cladding material for a lead, and further it relates to the use of a cladding material for a lead welded to a terminal of a battery.

### Background Art

A lead welded to a terminal of a battery is known in general. For example, such a lead is disclosed in JP-A-2007-35650,disclosing a method of welding a battery container by resistance-welding lead materials, in which plated layers made of Ni are formed on surfaces of mild steel sheets, to a battery can and a lid, in which plated layers made of an Ni-Fe alloy are formed on surfaces of mild steel sheets. The method is so constituted that current is fed to electrodes for resistance welding in a state where the plated layers, made of Ni, of the lead materials and the electrodes are in contact with each other in the resistance welding so that the lead materials are resistance-welded to the battery can and the lid. Although not clearly described in the aforementioned Japanese Patent Laying-Open No. 2007-35650, it is conceivable that a plating bath is performed by introducing the mild steel sheets into an Ni plating tank in which moisture and an impurity other than Ni are contained when plating the mild steel sheets of the lead materials with Ni.

EP945209 discloses a cladding material for manufacturing a battery can. US20070037054 discloses a cladding material with a Ni layer only on one side.

### Summary of the Invention

### Problems to be Solved by the Invention

In the method of welding a battery container disclosed in JP-A-2007-35650, however, it is conceivable that there is a case where the moisture and the impurity other than Ni having been contained in the Ni plating tank remain in the plated layers of the lead materials when forming the plated layers made of Ni on the lead materials. In this case, there is such an inconvenience that the impurity remaining on the plated layers of the lead materials gasifies due to a high temperature at the time of welding when performing the resistance welding on the battery can and the lid. Therefore, there is such a problem that there is a case where the gasifying impurity remaining on the plated layers of the lead materials and the electrodes for resistance welding react with each other at the time of performing the resistance welding and hence the electrodes partially remain on the plated layers of the lead materials as foreign matter.

The present invention has been proposed in order to solve the aforementioned problem, and an object of the present invention is to provide a lead welded to a battery terminal and comprising a cladding material, which is capable of inhibiting foreign matter from remaining on a surface and a method of welding a cladding material for a lead.

### Means for Solving the Problems

According to the present invention there is provided a lead welded to a terminal (21, 22) of a battery (2) and comprising a cladding material (1) comprising:
- a first Ni layer (11) arranged on a side welded to the terminal of the battery;
- a second Ni layer (12) arranged on a side opposite to the welded side; and
- an Fe layer (10) arranged to be held between the layers (11) and (12) wherein the thickness of the layer (11) is 3.1-7.5 % of the thickness of the cladding material consisting of the layers (10)-(12).
   Also, the present invention relates to the use of a cladding material as defined above for a lead welded to a terminal of a battery.

Hereinafter, the present "lead welded to a terminal (21, 22) of a battery (2) and comprising a cladding material (1)" will also be abbreviated as the "lead of the invention", where appropriate.

In the lead of the invention, as hereinabove described, the cladding material consisting of the first Ni layer, the second Ni layer and the Fe layer is so employed as a lead material that the second Ni layer is not formed by employing an Ni plating tank in which moisture and an impurity other than Ni are contained dissimilarly to a case of employing a material plated with Ni as the lead material, whereby the moisture and the impurity other than Ni can be inhibited from remaining on the second Ni layer arranged on the side opposite to the welded side. Thus, the moisture and the impurity other than Ni can be inhibited from gasifying due to a high temperature at the time of welding, whereby foreign matter can be inhibited from remaining on a surface of the second Ni layer due to reaction between e.g. the second Ni layer and an electrode employed for the welding when welding the cladding material for a lead to the terminal of the battery. Further, the first Ni layer and the second Ni layer can be arranged on a surface of the lead material, whereby corrosion resistance of the cladding material for a lead can be improved as compared with a case of e.g. arranging a Ni-Fe alloy on the surface of the lead material. In addition, the cladding material for a lead includes the Fe layer having iron lower in cost than Ni as a substrate, whereby the lead material can be prepared at a lower cost as compared with a lead material made of only Ni.

In the aforementioned cladding material for a lead the thickness of the first Ni layer is 3.1-7.5 % of the cladding material. According to this structure, the bonding strength at the time of welding the cladding material for a lead to the terminal of the battery can be reliably ensured as compared with the case of employing the material plated with Ni as the lead material.

In the aforementioned cladding material the thickness of the first Ni layer is preferably 2.1-20.5 µm. According to this structure, the bonding strength substantially equivalent to or higher than that in the case of employing the material plated with Ni as the lead material can be obtained when welding the cladding material for a lead to the terminal of the battery in a case where the thickness of the cladding layer is 0.1-0.25 mm.

In the aforementioned cladding material the thickness of the first Ni layer and the thickness of the second Ni layer are preferably substantially equal to each other. According to this structure, the first Ni layer and the second Ni layer may not be distinguished from each other when welding the cladding material for a lead to the terminal of the battery. Thus, the cladding material for a lead can be easily welded to the terminal of the battery.

In the aforementioned cladding material for a lead according to the first aspect, the thickness of the second Ni layer is preferably 1.3-8.4 % of the thickness of the cladding layer. According to this structure, foreign matter can be more reliably inhibited from remaining on the surface of the second Ni layer.

In the aforementioned cladding material the first Ni layer is preferably formed to be welded to a surface of an Ni layer of the terminal of the battery including the Ni layer. According to this structure, the first Ni layer of the lead material and the Ni layer of the terminal of the battery containing the same Ni element can be welded to each other, whereby the bonding strength can be further improved and the welding can be more easily performed as compared with a case of welding layers made of other elements to each other.

The method of of the present invention is a method of welding a cladding material for a lead by resistance-welding a cladding material (1) including a first Ni layer (11), a second Ni layer (12) and an Fe layer (10) arranged to be held between the layers (11) and (12), wherein the thickness of the layer (11) is 3.1-7.5 % of the thickness of the cladding material consisting of the layers (10)-(12), to a terminal (21, 22) of a battery (2), comprising the steps of:
- arranging the cladding material (1) on the terminal of a battery (2) so that the layer (11) is positioned on the side of the terminal of the battery; and
- resistance-welding the layer (11) to the terminal of the battery by feeding electricity to an electrode (4a) for resistance welding in a state of arranging the electrode on the side of the layer (12).

In the present method the cladding material consisting of the first Ni layer, the second Ni layer and the Fe layer is employed as a lead material resistance-welded to the terminal of the battery so that the second Ni layer is not formed by employing an Ni plating tank in which moisture and an impurity other than Ni are contained dissimilarly to a case of employing a material plated with Ni as the lead material, whereby the moisture and the impurity other than Ni can be inhibited from remaining on the second Ni layer arranged on the side opposite to the resistance-welded side. Thus, the moisture and the impurity other than Ni can be inhibited from gasifying due to a high temperature at the time of resistance welding, whereby foreign matter can be inhibited from remaining on a surface of the second Ni layer due to reaction between the second Ni layer and the electrode for resistance welding when resistance-welding the cladding material for a lead to the terminal of the battery. Further, the first Ni layer and the second Ni layer can be arranged on a surface of the lead material, whereby corrosion resistance of the cladding material for a lead can be improved as compared with a case of arranging an Ni-Fe alloy or the like on the surface of the lead material. In addition, the cladding material for a lead includes the Fe layer having iron at a lower cost than Ni as a substrate, whereby the lead material can be prepared at a lower cost as compared with a lead material made of only Ni. Further, the thickness of the first Ni layer is 3.1-7.5 % of the thickness of the cladding material. According to this structure, the bonding strength can be reliably ensured as compared with the case of employing the material plated with Ni as the lead material.

### Brief Description of the Drawings

[Fig. 1] A schematic diagram showing a state where lead materials according to an embodiment of the present invention are welded to an anode terminal and a cathode terminal of a secondary battery for a portable telephone.
[Fig. 2] An enlarged sectional view showing a state where each lead material according to the embodiment of the present invention is welded onto a surface of the anode terminal or the cathode terminal.
[Fig. 3] A perspective view showing a state at a time of welding the lead material according to the embodiment of the present invention to the anode terminal or the cathode terminal by resistance welding.
[Fig. 4] A perspective view for illustrating a bonding strength evaluation test conducted for confirming effects of the present invention.
[Fig. 5] A table showing results of the bonding strength evaluation test conducted for confirming effects of the present invention.
[Fig. 6] A graph showing results of the bonding strength evaluation test conducted for confirming effects of the present invention.
[Fig. 7] A table showing results of an electrode welding evaluation test conducted for confirming effects of the present invention.
[Fig. 8] A graph showing a state of electrode welding in a test material 3 (Example) conducted for confirming effects of the present invention.
[Fig. 9] A graph showing a state of electrode welding in a test material 8 (comparative example) conducted for confirming effects of the present invention.
[Fig. 10] A diagram for illustrating a corrosion resistance evaluation test conducted for confirming effects of the present invention.
[Fig. 11] A table showing results of the corrosion resistance evaluation test conducted for confirming effects of the present invention.
[Fig. 12] A schematic diagram showing a state where lead materials according to the embodiment of the present invention are welded to an anode terminal and a cathode terminal of a secondary battery for a notebook computer.

### Modes for Carrying Out the Invention

An embodiment of the present invention is described on the basis of the drawings.

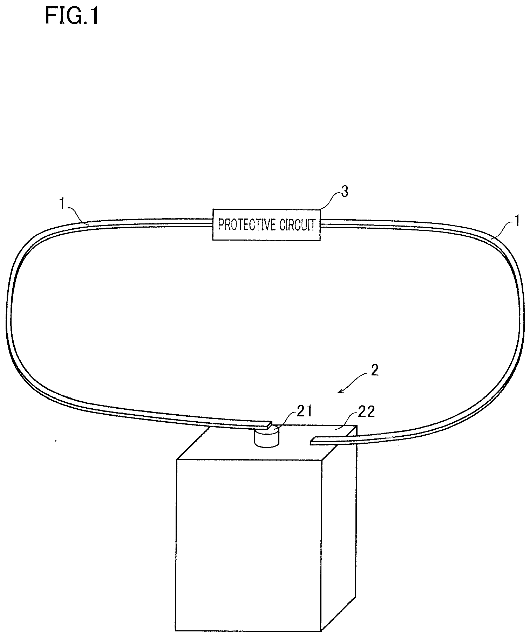

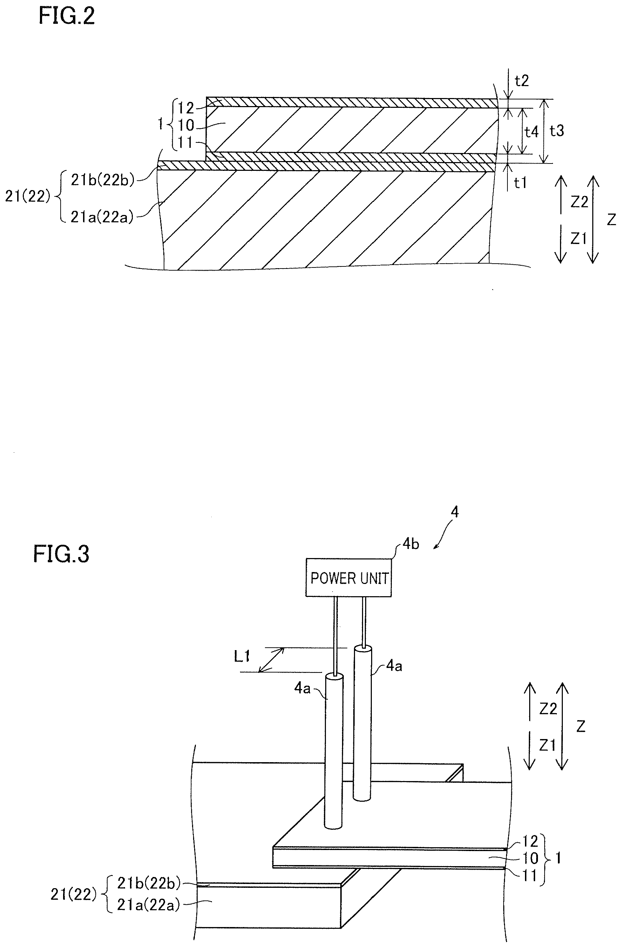

First, the structure of a lead material 1 of the present invention is described with reference to Figs. 1 and 2.

As exemplary application of the lead material 1, lead materials 1 are welded to an anode terminal 21 and a cathode terminal 22 of a secondary battery 2 for a portable telephone by resistance welding, as shown in Fig. 1. More specifically, an end portion of one of a pair of lead materials 1 is welded to the anode terminal 21 consisting of a protruding portion formed on the secondary battery 2 for a portable telephone by resistance welding, while another end portion is connected to a protective circuit 3. An portion of the other one of the pair of lead materials 1 is welded to the cathode terminal 22 consisting of a case portion of the secondary battery 2 for a portable telephone by resistance welding, while another end portion is connected to the protective circuit 3. The lead materials 1 are examples of the "cladding material for a lead" in the present invention, the secondary battery 2 for a portable telephone is an example of the "battery" in the present invention, and the anode terminal 21 and the cathode terminal 22 are examples of the "terminal" in the present invention.

The protective circuit 3 is formed to control charging/discharging of the secondary battery 2 for a portable telephone, and so formed that overcharging to the secondary battery 2 and overdischarging from the secondary battery 2 to a control circuit portion (not shown) are suppressed by the protective circuit 3.

According to this embodiment, each lead material 1 is formed by bonding a welded-side Ni layer 11 made of Ni and a non-welded-side Ni layer 12 made of Ni onto both surfaces, i.e. an upper surface and a lower surface of an Fe layer 10 made of SPCD (cold-rolled steel plate for deep drawing) respectively by pressure welding, as shown in Fig. 2. In other words, the lead material 1 is formed as a cladding material consisting of three layers (Ni layer/Fe layer/Ni layer) including the Fe layer 10 as a substrate. The welded-side Ni layer 11 is arranged on a side (Zi side) welded to a surface of the anode terminal 21 or the cathode terminal 22 shown in Fig. 1, while the non-welded-side Ni layer 12 is arranged on a side (Z2 side) opposite to the welded side. The welded-side Ni layer 11 is an example of the "first Ni layer" in the present invention, and the non-welded-side Ni layer 12 is an example of the "second Ni layer" in the present invention.

This embodiment is so formed that the thickness t3 of the lead material 1 is 0.1-0.25 mm while the thickness t1 of the welded-side Ni layer 11 is 3.1-7.5 % of the thickness t3 of the lead material 1. In other words, the embodiment is so formed that, in a case where the thickness t3 of the lead material 1 is 0.1 mm, the thickness t1 of the welded-side Ni layer 11 is 3.1-7.5 µm (3.1-7.5 % of the thickness t3 of the lead material 1) The thickness t1 of the welded-side Ni layer 11 is preferably about 5.2 µm (about 5.2 % of the thickness t3 of the lead material 1).

The embodiment is so formed that, in the case where the thickness t3 of the lead material 1 is 0.1 mm, the thickness t2 of the non-welded-side Ni layer 12 is 2.1-8.2 µm (2.1-8.2 % of the thickness t3 of the lead material 1). Further, the embodiment is so formed that the thickness t4 of the Fe layer 10 is 83.6-95.8 µm.

The embodiment is so formed that, in a case where the thickness t3 of the lead material 1 is 0.25 mm, the thickness t1 of the welded-side Ni layer 11 is 7.8-18.8 µm (3.1-7.5 % of the thickness t3 of the lead material 1). The thickness t1 of the welded-side Ni layer 11 is preferably about 13.0 µm (about 5.2 % of the thickness t3 of the lead material 1).

The embodiment is so formed that, in the case where the thickness t3 of the lead material 1 is 0.25 mm, the thickness t2 of the non-welded-side Ni layer 12 is 5.3-20.5 µm (2.1-8.2 % of the thickness t3 of the lead material 1). Further, the embodiment is so formed that the thickness t4 of the Fe layer 10 is 159.0-189.4 µm.

This embodiment is so formed that the thickness t1 of the welded-side Ni layer 11 and the thickness t2 of the non-welded-side Ni layer 12 are substantially equal to each other.

The anode terminal 21 and the cathode terminal 22 include substrates 21a and 22a made of A1 or low-carbon steel and Ni layers 21b and 22b formed on surfaces of the substrates 21a and 22a on welded sides (side of a direction of arrow Z2) respectively, as shown in Fig. 2. Thus, the embodiment is so formed that the welded-side Ni layer 11 of the lead material 1 is welded to the surface of the Ni layer 21b of the anode terminal 21 or the surface of the Ni layer 22b of the cathode terminal 22.

In a case where the substrate 21a (22a) is made of A1, the anode terminal 21 (cathode terminal 22) is formed as a cladding material in which the substrate 21a (22a) and the Ni layer 21b (22b) are bonded to each other. In a case where the substrate 21a (22a) is made of low-carbon steel, on the other hand, the anode terminal 21 (cathode terminal 22) is formed as an Ni-plated material in which the substrate 21a (22a) is plated with the Ni layer 21b (22b).

The method of the present invention is now described (in broader terms but including the present method) with reference to Figs. 2 and 3.

First, a steel plate of SPCD having a thickness of 2 mm and Ni plates made of Ni each having a thickness of 43.8-196.2 µm are prepared. In a case where the thickness of each Ni plate is 43.8 µm, the thickness of the Ni plate is set to be 2.1 % of the total (2087.6 µm) of the thickness of the steel plate of SPCD and the thicknesses of a pair of Ni plates. Similarly, in a case where the thickness of each Ni plate is 196.2 µm, the thickness of the Ni plate is set to be 8.2 % of the total (2392.4 µm) of the thickness of the steel plate of SPCD and the thicknesses of the pair of Ni plates.

Then, the steel plate of SPCD and the pair of Ni plates are pressure-welded to each other in a state of arranging the same Ni plates on both surfaces of SPCD, so that the ratio of a thickness after rolling to a thickness before rolling is about 60 %. Thus, a cladding material of Ni layer/Fe layer/Ni layer having a thickness of at least about 0.84 mm (in the case where the thickness of each Ni plate is about 2.1 % of the total thickness) and not more than about 0.96 mm (in the case where the thickness of each Ni plate is about 8.2 % of the total thickness), in which the Ni layers are bonded onto both surfaces of the Fe layer, is prepared.

Then, diffusion annealing is performed by holding the prepared cladding material of Ni layer/Fe layer/Ni layer having the thickness of 0.84-0.96 mm in an environment of about 1000°C for about three minutes. Thereafter the lead material 1 having the thickness t3 of 0.1-0.25 mm is prepared by performing rolling. At this time, both of the thickness t1 of the welded-side Ni layer 11 and the thickness t2 of the non-welded-side Ni layer 12 are 2.1-8.2 % of the thickness t3 of the lead material 1.

To be an embodiment of the method of the invention, in the above describes process the thickness of the Ni plate forming the first Ni layer 11 is selected to be 3.1-7.5 % of the total of the thickness of the steel plate of SPCD and the thicknesses of a pair of Ni plates

Then, the lead material 1 is arranged on the anode terminal 21 (cathode terminal 22) so that the welded-side Ni layer 11 of the lead material 1 is positioned on the surface of the Ni layer 21b of the anode terminal 21 (surface of the Ni layer 22b of the cathode terminal 22) of the secondary battery 2, as shown in Fig. 3. This embodiment is so formed that the thickness t1 of the welded-side Ni layer 11 and the thickness t2 of the non-welded-side Ni layer 12 are substantially identical to each other, and hence either one of both surfaces of the lead material 1 may simply be arranged on the surface of the Ni layer 21b (22b). In other words, the layer on the side arranged on the surface of the Ni layer 21b (22b) becomes the welded-side Ni layer 11, and the layer on the side opposite to the side arranged on the surface of the Ni layer 21b (22b) becomes the non-welded-side Ni layer 12. Then, columnar electrodes 4a for resistance welding, made of alumina dispersed copper, each having a diameter of about 1 mm are arranged in a pair on the surface of the lead material 1 on the side of the non-welded-side Ni layer 12. At this time, the pair of electrodes 4a are arranged at a distance L1 (about 4.5 mm).

The pair of electrodes 4a are connected to a power unit 4b converting direct current to alternating current and supplying the same to the pair of electrodes 4a, and a DC inverter type resistance welder 4 is constituted of the pair of electrodes 4a and the power unit 4b.

According to this embodiment, current of about 3.5 kA is fed to the electrodes 4a for about 0.004 seconds (4 msec.) while pressing the pair of electrodes 4a against the non-welded-side Ni layer 12 of the lead material 1 with force of about 78.5 N. Thus, the lead material 1 and the anode terminal 21 (cathode terminal 22) generate heat due to electrical resistance possessed by each when current flows to the lead material 1 in the vicinity of the pair of electrodes 4a and the anode terminal 21 (cathode terminal 22) of the secondary battery 2. As a result of this, the welded-side Ni layer 11 and the Ni layer 21b (22b) are melted, whereby the lead material 1 and the anode terminal 21 (cathode terminal 22) are welded to each other.

Then, the electrodes 4a are separated from the non-welded-side Ni layer 12 of the lead material 1, whereby wending of the lead material 1 to the anode terminal 21 (cathode terminal 22) is terminated.

According to this embodiment, as hereinabove described, the cladding material of three layers (Ni layer/Fe layer/Ni layer) consisting of the welded-side Ni layer 11, the non-welded-side Ni layer 12 and the Fe layer 10 is so employed as the lead material 1 that the non-welded-side Ni layer 12 is not formed by employing an Ni plating tank in which moisture and an impurity other than Ni are contained dissimilarly to a case of employing a material plated with Ni as the lead material, whereby the moisture and the impurity other than Ni can be inhibited from remaining on the non-welded-side Ni layer 12 arranged on the side opposite to the welded side. Thus, the moisture and the impurity other than Ni can be inhibited from gasifying due to a high temperature at the time of welding, whereby foreign matter can be inhibited from remaining on the non-welded-side Ni layer 12 due to reaction between the non-welded-side Ni layer 12 and the pair of electrodes 4a employed for the welding when welding the lead material 1 to the anode terminal 21 or the cathode terminal 22. Further, the welded-side Ni layer 11 and the non-welded-side Ni layer 12 can be arranged on the surfaces of the cladding material employed as the lead material 1, whereby corrosion resistance of the lead material 1 can be improved as compared with a case of arranging Ni-Fe alloys or the like on the surfaces of the lead material 1. In addition, the lead material 1 includes the Fe layer 10 having iron lower in cost than Ni as the substrate, whereby the lead material 1 can be prepared at a lower cost as compared with a lead material made of only Ni.

According to this embodiment, as hereinabove described, the thickness t1 of the welded-side Ni layer 11 is set to 3.1-7.5 % of the thickness t3 of the lead material 1, whereby the bonding strength at the time of welding the lead material 1 to the anode terminal 21 or the cathode terminal 22 can be reliably ensured as compared with the case of employing the material plated with Ni as the lead material.

According to this embodiment, as hereinabove described, the thickness t1 of the welded-side Ni layer 11 is set to 2.1-20.5 µm, whereby the bonding strength substantially equivalent to or higher than that in the case of employing the material plated with Ni as the lead material can be obtained when welding the lead material 1 to the anode terminal 21 or the cathode terminal 22 in the case where the thickness t3 of the lead material 1 is 0.1-0.25 mm.

According to this embodiment, as hereinabove described, the thickness t1 of the welded-side Ni layer 11 and the thickness t2 of the non-welded-side Ni layer 12 are substantially equalized to each other, whereby the welded-side Ni layer 11 and the non-welded-side Ni layer 12 may not be distinguished from each other when welding the lead material 1 to the anode terminal 21 or the cathode terminal 22. Thus, the lead material 11 can be easily welded to the anode terminal 21 or the cathode terminal 22.

Further, the thickness t2 of the non-welded-side Ni layer 12 is set to 2.1-8.2 % of the thickness t3 of the lead material 1, whereby foreign matter can be more reliably inhibited from remaining on the non-welded-side Ni layer 12.

According to this embodiment, as hereinabove described, the thickness t1 of the welded-side Ni layer 11 is so welded to the surface of the Ni layer 21b of the anode terminal 21 (surface of the Ni layer 22b of the cathode terminal 22) that the welded-side Ni layer 11 and the Ni layer 21b (22b) containing the same Ni element can be welded to each other, whereby the bonding strength can be more improved and the welding can be easily performed as compared with a case of welding layers made of different elements to each other.

### (Modification of This Embodiment)

While the example of substantially equalizing the thickness t1 of the welded-side Ni layer 11 and the thickness t2 of the non-welded-side Ni layer 12 to each other has been shown in the aforementioned embodiment, the thickness t1 of the welded-side Ni layer 11 and the thickness t2 of the non-welded-side Ni layer 12 may be rendered different from each other, as a modification of the aforementioned embodiment. In this case, the thickness t1 of the welded-side Ni layer 11 is 3.1-7.5 % of the thickness t3 of the lead material 1, while the thickness t2 of the non-welded-side Ni layer 12 may be less 2.1 % or greater than 8.2 % of the thickness t3 of the lead material 1. The thickness t2 of the non-welded-side Ni layer 12 is more preferably at least 1.3-8.4 % of the thickness t3 of the lead material 1, in order to more reliably inhibit foreign matter from remaining on the surface of the non-welded-side Ni layer 12.

### [Examples]

Confirmative experiments related to a bonding strength evaluation test, an electrode welding evaluation test and a corrosion resistance evaluation test conducted for confirming effects according to this embodiment are now described with reference to Figs. 2-11.

In the bonding strength evaluation test and the electrode welding evaluation test described below, lead materials 1, having thicknesses t3 (see Fig. 2) of 0.1 mm, so formed that thicknesses t1 of welded-side Ni layers 11 (thicknesses t2 of non-welded-side Ni layers 12: see Fig. 2) were different from each other were prepared in plural as test materials 1-7 corresponding to the lead material 1 according to this embodiment, by employing the aforementioned method of welding the lead material 1 according to this embodiment. At this time, each lead material 1 was so prepared that the thickness t1 of the welded-side Ni layer 11 and the thickness t2 of the non-welded-side Ni layer 12 were identical to each other.

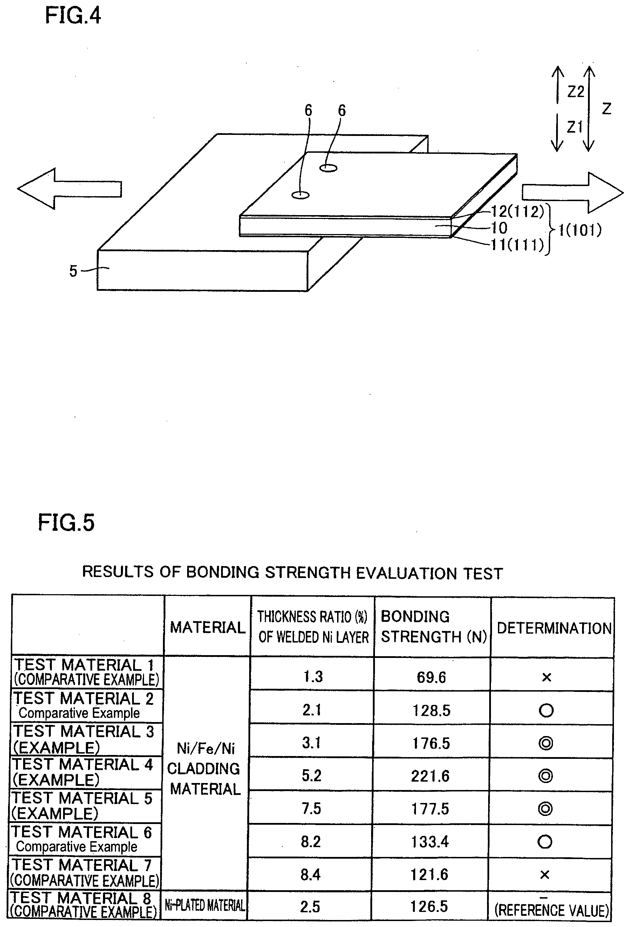

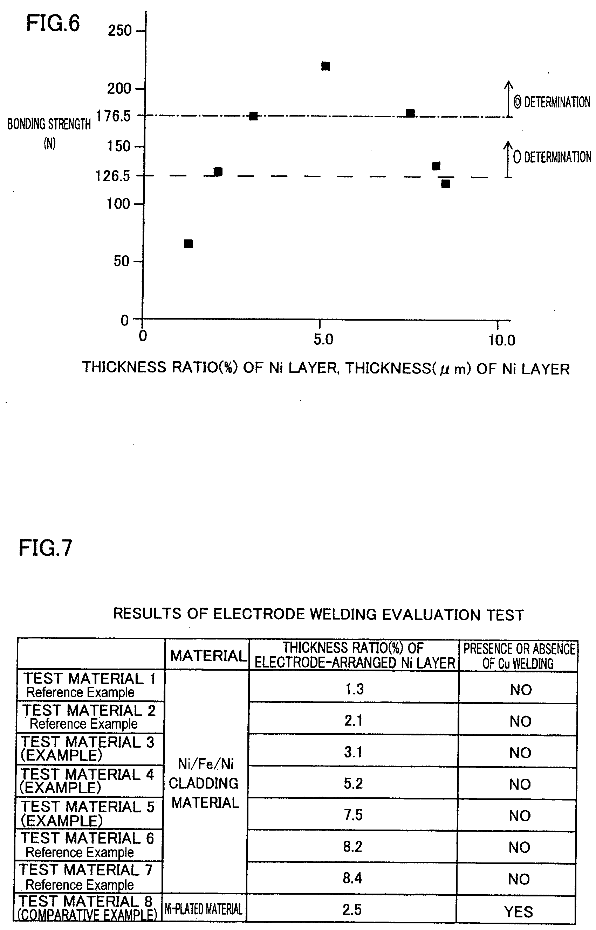

More specifically, the thickness t1 of the welded-side Ni layer 11 (thickness t2 of the non-welded-side Ni layer 12) was set to 1.3 µm (1.3 % of the thickness t3 (0.1 mm) of the lead material 1) in the lead material 1 of the test material 1, as shown in Figs. 5 and 7. In the lead material 1 of the test material 2, the thickness t1 of the welded-side Ni layer 11 (thickness t2 of the non-welded-side Ni layer 12) was set to 2.1 µm (2.1 % of the thickness t3 of the lead material 1).

In the lead material 1 of the test material 3, the thickness t1 of the welded-side Ni layer 11 (thickness t2 of the non-welded-side Ni layer 12) was set to 3.1 µm (3.1 % of the thickness t3 of the lead material 1). In the lead material 1 of the test material 4, the thickness t1 of the welded-side Ni layer 11 (thickness t2 of the non-welded-side Ni layer 12) was set to 5.2 µm (5.2 % of the thickness t3 of the lead material 1).

In the lead material 1 of the test material 5, the thickness t1 of the welded-side Ni layer 11 (thickness t2 of the non-welded-side Ni layer 12) was set to 7.5 µm (7.5 % of the thickness t3 of the lead material 1). In the lead material 1 of the test material 6, the thickness t1 of the welded-side Ni layer 11 (thickness t2 of the non-welded-side Ni layer 12) was set to 8.2 µm (8.2 % of the thickness t3 of the lead material 1).

In the lead material 1 of the test material 7, the thickness t1 of the welded-side Ni layer 11 (thickness t2 of the non-welded-side Ni layer 12) was set to 8.4 µm (8.4 % of the thickness t3 of the lead material 1).

On the other hand, a lead material 101 (see Fig. 4) in which a welded-side Ni layer 111 and a non-welded-side Ni layer 112 (see Fig. 4) formed on both surfaces of an Fe layer 10 are plated layers of Ni was prepared as a test material 8 to be compared with the lead material 1 consisting of the cladding material of Ni layer/Fe layer/Ni layer according to this embodiment. In other words, the lead material 101 consists of an Ni-plated material. At this time, the thickness of the lead material 101 was set to 0.1 mm, while the thicknesses of the welded-side Ni layer 111 and the non-welded-side Ni layer 112 were set to 2.5 µm.

Then, current of 3.5 kA was fed to electrodes 4a for 0.004 seconds while pressing the electrodes 4a (see Fig. 3) against the non-welded-side Ni layer 12 (112) of each lead material 1 (101) with force of 78.5 N so that the welded-side Ni layer 11 (111) of the lead material 1 (101) was positioned on a surface of a welding base material 5 (see Fig. 4) made of low-carbon steel. Thus, each of the lead materials 1 (101) of the prepared test materials 1 to 8 was welded to the welding base material 5 by resistance welding.

In these evaluation tests (the bonding strength evaluation test and the electrode welding evaluation test), the evaluation tests were conducted by employing the welding base material 5 having no Ni layers 21b and 22b (see Fig. 2) for improving bonding strength, in place of the anode terminal 21 and the cathode terminal 22 in the aforementioned embodiment. This is in order to obtain conditions for obtaining bonding strength of at least reference strength described later in a state of not providing the Ni layers 21b and 22b improving the bonding strength in these evaluation tests.

### (Bonding Strength Evaluation Test)

The bonding strength evaluation test is now described. In this bonding strength evaluation test, the lead material 1 (101) of each of the test materials 1 to 8 and the welding base material 5 resistance-welded to each other were pulled in directions opposite to each other at a speed of 10 mm/min., to obtain tensile strength at a time when welded portions were broken as bonding strength.

In the bonding strength evaluation test, the test materials 3-5 correspond to Examples of the invention, while the test materials 1, 2 and 68 correspond to comparative examples.

In the bonding strength evaluation test, bonding strength was determined while regarding the bonding strength of the test material 8 (comparative example) employed in general as reference strength. In other words, in a case where a certain test material had bonding strength exceeding the bonding strength (126.5N shown in Fig. 5) of the test material 8, the test material was determined as having sufficient bonding strength (single circle determination), while in a case where another certain test material had bonding strength less than the bonding strength of the test material 8, the test material was determined as not having sufficient bonding strength (cross determination). In a case where still another certain test material had bonding strength of at least 176.5N, greater than the bonding strength (126.5N) of the test material 8 by 50N, further, the test material was determined as having more preferable bonding strength (double circle determination).

As results of the bonding strength evaluation test shown in Figs. 5 and 6, the bonding strength reached 69.6N and 128.5N in the test materials 1 and 2 (comparative examples), while the bonding strength reached 133.4N and 121.6N in the test materials 6 and 7 (comparative examples), and in case of test material became less than the bonding strength (126.5N) of the test material 8. In the test materials 3-5 (Examples), the bonding strength reached at least 176.5N (test material 3) and not more than 221.6N (test material 4), and became bonding strength of at least 176.5N. Thus, it could be confirmed that bonding strength greater than that of the test material 8 (comparative example) by at least 50N is obtained in the case where the thickness t1 of the welded-side Ni layer 11 is at least 3.1 % (test material 3) and not more than 7.5 % (test material 5) of the thickness t3 of the lead material 1. In the test material 4 (Example), the bonding strength reached the maximum (221.6N). Thus, it could be confirmed that the bonding strength is maximized in the case where the thickness t1 of the welded-side Ni layer 11 is 5.2 % of the thickness t3 of the lead material 1.

The bonding strength reached the maximum in the test material 4 (thickness t1 of the welded-side Ni layer 11 was 5.2 µm) conceivably because the thickness t1 of the welded-side Ni layer 11 contributing to welding was small and the quantity of Ni contributing to the welding was small in the case where the thickness t1 of the welded-side Ni layer 11 was smaller than 5.2 µm (test materials 1-3) and hence the bonding strength became small as compared with the test material 4. Further, Ni of the welded-side Ni layer 11 has smaller electric resistance and larger thermal conductivity as compared with the Fe layer 10. In the case where the thickness t1 of the welded-side Ni layer 11 is greater than 5.2 µm (test materials 5-7), therefore, it is conceivable that heat generation resulting from flowing current is small and generated heat is easily conducted to the whole of the welded-side Ni layer 11 at the time of resistance welding. In the test materials 5-7, therefore, it is conceivable that the quantity of heat employed for resistance welding became smaller as compared with the test material 4 and hence the bonding strength resulting from welding became small.

### (Electrode Welding Evaluation Test)

The electrode welding evaluation test is now described. In this electrode welding evaluation test, the surface of the non-welded Ni layer 12 (112) on electrode arrangement positions 6 of each of the test materials 1-8 shown in Fig. 4 where the electrodes 4a (see Fig. 3) had been arranged was analyzed with an electron probe microanalyzer (EPMA) after the welding by resistance welding, and presence or absence of welding of Cu contained in the electrodes 4a was confirmed. More specifically, the concentration of Cu on the surface of the non-welded-side Ni layer 12 (112) on an arbitrary straight line in either electrode arrangement position 6 of each of the test materials 1-8 was analyzed, and it was determined that Cu was welded (YES determination) in a case where there existed a location of measurement where the concentration of Cu was at least 73.5 %. In a case where there existed no location of measurement where the concentration of Cu was at least 73.5 %, on the other hand, it was determined that Cu was not welded (NO determination).

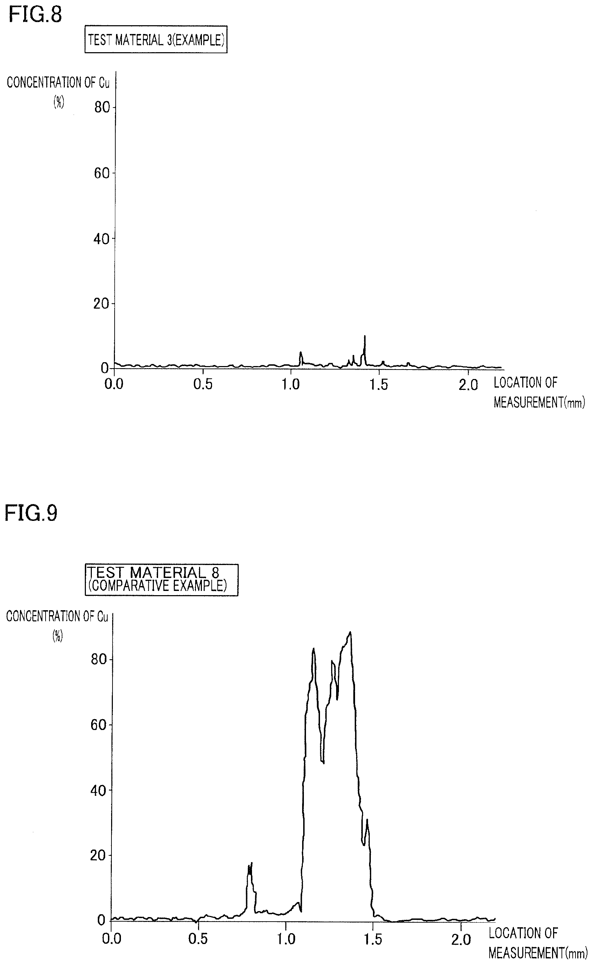

As results of the electrode welding evaluation test shown in Fig. 7, no welding of Cu was confirmed in any of the test materials 1-7 of the lead materials 1 consisting of cladding materials of Ni layers/Fe layers/Ni layers. On the surface of the non-welded-side Ni layer 12 on the electrode arrangement positions 6 of the test material 3 (thickness t1 of the non-welded-side Ni layer 12 is 3.1 µm) shown in Fig. 8, for example, only welding of Cu in a concentration of about 10 % could be confirmed at a maximum, and there existed no location of measurement where the concentration of Cu was at least 73.5 %. Thus, it could be confirmed that there was no welding of the electrodes 4a in the case where the thickness t1 of the non-welded-side Ni layer 12 was at least 1.3 % (test material 1) and not more than 8.4 % (test material 7) of the thickness t3 of the lead material 1.

In the test material 8) of the lead material 101 in which the non-welded-side Ni layer 112 consisted of the plated layer of Ni, on the other hand, welding of Cu in a concentration of about 90 % was confirmed on locations of measurement from 1.1 mm to 1.5 mm on the surface of the non-welded-side Ni layer 112 on the electrode arrangement positions 6, as shown in Fig. 9. Thus, there existed locations of measurement where the concentrations of Cu were at least 73.5 %, and hence it could be confirmed that welding of the electrodes 4a took place in the lead material 101 whose non-welded-side Ni layer 112 consisted of the plated layer of Ni. Thus, it could be confirmed that the non-welded-side Ni layer 12 of the lead material 1 and the electrodes 4a for resistance welding made of alumina dispersed copper can be inhibited from reacting with each other at the time of performing resistance welding by employing the lead material 1 consisting of the cladding material of Ni layer/Fe layer/Ni layer.

### (Corrosion Resistance Evaluation Test)

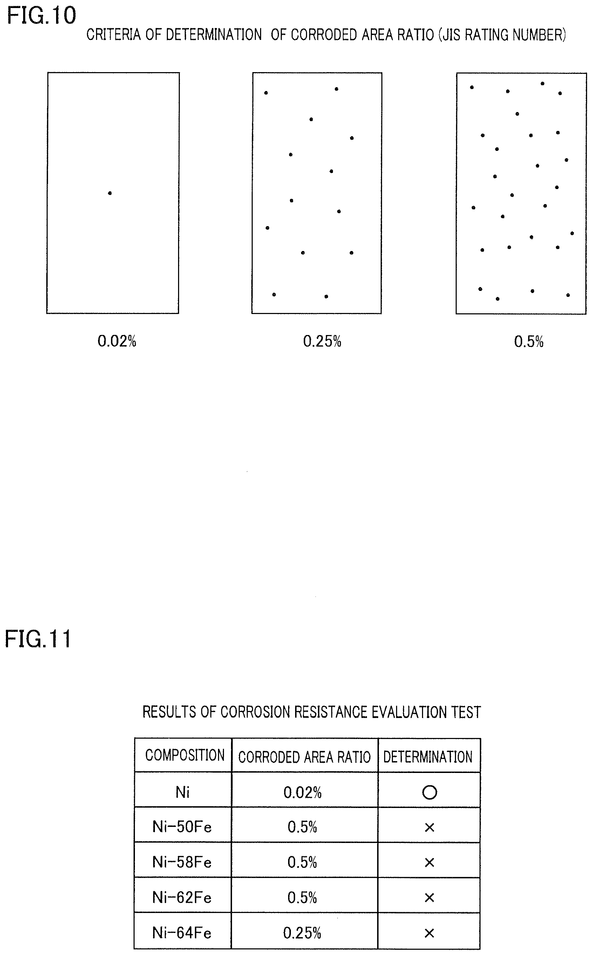

Finally, the corrosion resistance evaluation test conducted as the confirmative experiment is described. In this confirmative experiment, evaluation of corrosion resistance of a plate material made of Ni and plate materials made of Ni-Fe alloys was performed. More specifically, the corrosion resistance evaluation test was conducted by employing a plate material made of Ni, a plate material made of an Ni-50Fe alloy containing 50 % of Fe, a plate material made of an Ni-58Fe alloy containing 58 % of Fe, a plate material made of an Ni-62Fe alloy containing 62 % of Fe and a plate material made of an Ni-64Fe alloy containing 64 % of Fe as test materials. The corrosion resistance evaluation test was conducted by spraying 5 % (50 g/L) aqueous NaCl solutions to the test materials continuously for 24 hours under a temperature condition of 35°C according to the "salt spray testing method" of JISZ2371. The corrosion resistance of each test material was evaluated by observing a corroded state of the test material after the test. The corroded state was determined with reference to the ratio of a corroded area to a constant area with reference to criteria of determination (JIS rating numbers) of corroded area ratios shown in Fig. 10.

As results of the corrosion resistance evaluation test shown in Fig. 11, the corroded area ratio reached 0.02 % in the plate material made of Ni, and it was confirmed that the plate material made of Ni was not much corroded. On the other hand, the corroded area ratios reached 0.5 % in the plate material made of the Ni-50Fe alloy, the plate material made of the Ni-58Fe alloy and the plate material made of the Ni-62Fe alloy, while the corroded area ratio was 0.25 % in the plate material made of the Ni-64Fe alloy. As a result of this, it could be confirmed that the plate materials made of the Ni-50Fe alloy, the Ni-58Fe alloy, the Ni-62Fe alloy and the Ni-64Fe alloy were more easily corroded by at least 10 times as compared with the plate material made of Ni. Thus, it could be confirmed that the corrosion resistance can be improved by arranging the welded-side Ni layer 11 made of Ni and the non-welded-side Ni layer 12 made of Ni on the surfaces of the lead material 1 as shown in Fig. 2, as compared with a case where Ni-Fe alloys are arranged on surfaces of a lead material.

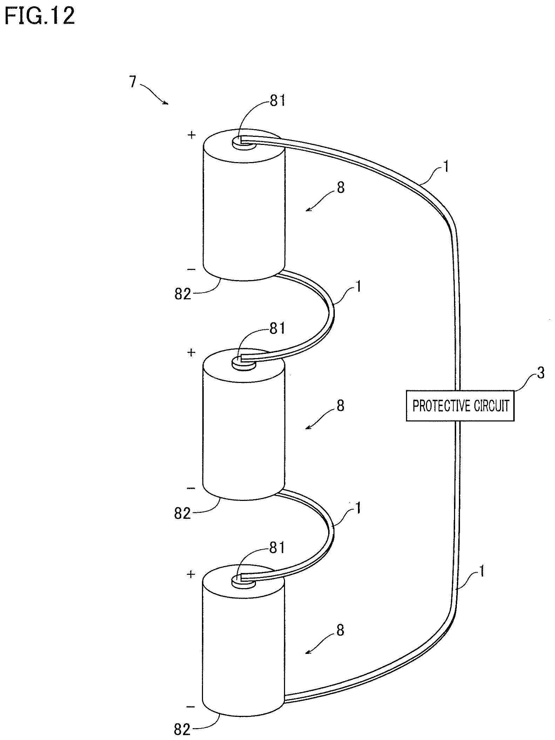

While the example of applying the lead material 1 to the lead materials welded to the anode terminal 21 and the cathode terminal 22 of the secondary battery 2 for a portable telephone by resistance welding has been shown in the aforementioned embodiment, the present invention is not restricted to this. The lead material 1 (cladding material for a lead according to the present invention) according to this embodiment may be applied to lead materials welded to anode terminals 81 and cathode terminals 82 of three secondary batteries 8 constituting a secondary battery 7 for a notebook computer by resistance welding, as shown in Fig. 12, for example. In this application example, the lead materials 1 are so welded as to connect the anode terminals 81 and the cathode terminals 82 of the three secondary batteries 8 with each other, and so welded as to connect the secondary battery 7 for a notebook computer and a protective circuit 3 with each other. The secondary batteries 8 are examples of the "battery" in the present invention, and the anode terminals 81 and the cathode terminals 82 are examples of the "terminal" in the present invention. As an application example other than the aforementioned application example, the cladding material for a lead according to the present invention may be applied to a lead material welded to a terminal of a primary battery.

While the example in which the thickness t3 of the lead material 1 is 0.1-0.25 mm has been shown in the aforementioned embodiment, the present invention is not restricted to this. According to the present invention, the thickness of the lead material may be less than 0.1 mm, or may be greater than 0.25 mm. Also in this case, the thickness of the welded-side Ni layer (first Ni layer) must be 3.1-7.5 % of the thickness of the cladding material for a lead.

While the example of forming the lead material 1 by bonding the welded-side Ni layer 11 and the non-welded-side Ni layer 12 onto both surfaces of the Fe layer 10 respectively has been shown in the aforementioned embodiment, the present invention is not restricted to this. According to the present invention, the lead material may be formed to consist of a three-layer cladding material only in the vicinity of a welded portion by bonding a welded-side Ni layer and a non-welded-side Ni layer only in the vicinity of the welded portion of the lead material.

While the example of employing the SPCD (cold-rolled steel plate for deep drawing) as the Fe layer 10 of the lead material 1 has been shown in the aforementioned embodiment, the present invention is not restricted to this. According to the present invention, another Fe material such as SPCC (commercial cold-rolled steel plate) or hot-rolled steel plate may be employed as the Fe layer.

## Claims

1. A lead welded to a terminal (21, 22) of a battery (2) and comprising a cladding material (1) comprising:
- a first Ni layer (11) arranged on a side welded to the terminal of the battery;
- a second Ni layer (12) arranged on a side opposite to the welded side; and
- an Fe layer (10) arranged to be held between the layers (11) and (12) wherein the thickness of the layer (11) is 3.1-7.5 % of the thickness of the cladding material consisting of the layers (10)-(12).

2. The lead of claim 1, wherein the thickness of the layer (11) is 2.1-20.5 µm.

3. The lead of claim 1 or 2, wherein the thickness of the layer (11) and the thickness of the layer (12) are substantially equal to each other.

4. The lead of any of claims 1-3, wherein the thickness of the layer (12) is 1.3-8.4 % of the thickness of the cladding material (1).

5. The lead of any of claims 1-4, wherein the layer (11) is formed to be welded to a surface of an Ni layer (21b, 22b) of the terminal of a battery including the Ni layer.

6. The use of a cladding material (1) comprising:
- a first Ni layer (11) arranged on a side welded to the terminal of the battery;
- a second Ni layer (12) arranged on a side opposite to the welded side; and
- an Fe layer (10) arranged to be held between the layers (11) and (12) wherein the thickness of the layer (11) is 3.1-7.5 % of the thickness of the cladding material consisting of the layers (10)-(12), for a lead welded to a terminal (21, 22) of a battery (2).

7. The use of claim 6, wherein the thickness of the layer (11) is 2.1-20.5 µm.

8. The use of claim 6 or 7, wherein the thickness of the layer (11) and the thickness of the layer (12) are substantially equal to each other.

9. The use of any of claims 6-8, wherein the thickness of the layer (12) is 1.3-8.4 % of the thickness of the cladding material (1).

10. The use of any of claims 6-9, wherein the layer (11) is formed to be welded to a surface of an Ni layer (21b, 22b) of the terminal of a battery including the Ni layer.

11. A method of welding a cladding material for a lead by resistance-welding a cladding material (1) including a first Ni layer (11), a second Ni layer (12) and an Fe layer (10) arranged to be held between the layers (11) and (12), wherein the thickness of the layer (11) is 3.1-7.5 % of the thickness of the cladding material consisting of the layers (10)-(12), to a terminal (21, 22) of a battery (2), comprising the steps of:
- arranging the cladding material (1) on the terminal of a battery (2) so that the layer (11) is positioned on the side of the terminal of the battery; and
- resistance-welding the layer (11) to the terminal of the battery by feeding electricity to an electrode (4a) for resistance welding in a state of arranging the electrode on the side of the layer (12).

## Patentansprüche

1. Leitung, welche an einen Anschluss (21, 22) einer Batterie (2) geschweißt ist und ein Mantelmaterial (1) umfasst, umfassend:
- eine erste Ni-Schicht (11), angeordnet auf einer Seite, die an den Anschluss der Batterie geschweißt ist;
- eine zweite Ni-Schicht (12) angeordnet auf einer Seite, gegenüber der geschweißten Seite; und
- eine Fe-Schicht (10), so angeordnet, dass sie zwischen den Schichten (11) und (12) gehalten wird, wobei die Dicke der Schicht (11) 3.1-7.5% der Dicke des Mantelmaterials beträgt, welches aus den Schichten (10)-(12) besteht.

2. Leitung gemäß Anspruch 1, wobei die Dicke der Schicht (11) 2.1-20.5 µm beträgt.

3. Leitung gemäß Anspruch 1 oder 2, wobei die Dicke der Schicht (11) und die Dicke der Schicht (12) im Wesentlichen einander gleich sind.

4. Leitung gemäß einem der Ansprüche 1-3, wobei die Dicke der Schicht (12) 1.3-8.4 % der Dicke des Mantelmaterials (1) beträgt.

5. Leitung gemäß einem der Ansprüche 1-4, wobei die Schicht (11) gebildet wird, um auf eine Oberfläche einer Ni-Schicht (21b, 22b) des Anschlusses der Batterie, der die Ni-Schicht enthält, geschweißt zu werden.

6. Verwendung eines Mantelmaterials (1) umfassend:
- eine erste Ni-Schicht (11) angeordnet auf einer Seite, die an den Anschluss der Batterie geschweißt ist;
- eine zweite Ni-Schicht (12) angeordnet auf einer Seite, gegenüber der geschweißten Seite; und
- eine Fe-Schicht (10), so angeordnet, dass sie zwischen den Schichten (11) und (12) gehalten wird, wobei die Dicke der Schicht (11) 3.1-7.5 % der Dicke des Mantelmaterials beträgt, welches aus den Schichten (10)-(12) besteht.
für eine Leitung, welche an einen Anschluss (21, 22) einer Batterie (2) geschweißt ist.

7. Verwendung gemäß Anspruch 6, wobei die Dicke der Schicht (11) 2.1-20.5 µm beträgt.

8. Verwendung gemäß Anspruch 6 oder 7, wobei die Dicke der Schicht (11) und die Dicke der Schicht (12) im Wesentlichen einander gleich sind.

9. Verwendung gemäß einem der Ansprüche 6-8, wobei die Dicke der Schicht (12) 1.3-8.4 % der Dicke des Mantelmaterials (1) beträgt.

10. Verwendung gemäß einem der Ansprüche 6-9, wobei die Schicht (11) gebildet wird, um auf eine Oberfläche einer Ni-Schicht (21b, 22b) des Anschlusses der Batterie, der die Ni-Schicht enthält, geschweißt zu werden.

11. Verfahren zum Schweißen eines Mantelmaterials für eine Leitung durch Widerstandsschweißen eines Mantelmaterials (1), welches eine erste Ni-Schicht (11), eine zweite Ni-Schicht (12) und eine Fe-Schicht (10), so angeordnet, dass sie zwischen den Schichten (11) und (12) gehalten wird, enthält, wobei die Dicke der Schicht (11) 3.1-7.5 % der Dicke des Mantelmaterials, welches aus den Schichten (10)-(12) besteht, beträgt, das folgende Schritte umfasst:
- Anordnen des Mantelmaterials (1) auf dem Anschluss der Batterie (2), sodass die Schicht (11) auf der Seite des Anschlusses der Batterie positioniert ist; und
- Widerstandsschweißen der Schicht (11) an den Anschluss der Batterie durch Zuleiten von Elektrizität zu einer Elektrode (4a) für das Widerstandsschweißen, welche auf der Seite der Schicht (12) angeordnet ist.

## Revendications

1. Fil soudé à une borne (21, 22) d'une batterie (2) et comprenant un matériau de gainage (1) comprenant :
- une première couche de Ni (11) agencée sur un côté soudé à la borne de la batterie ;
- une seconde couche de Ni (12) agencée sur un côté opposé au côté soudé; et
- une couche de Fe (10) agencée de sorte à être retenue entre les couches (11) et (12), dans lequel l'épaisseur de la couche (11) est de 3,1 à 7,5 % de l'épaisseur du matériau de gainage constitué des couches (10) à (12).

2. Fil selon la revendication 1, dans lequel l'épaisseur de la couche (11) est de 2,1 à 20,5 µm.

3. Fil selon la revendication 1 ou 2, dans lequel l'épaisseur de la couche (11) et l'épaisseur de la couche (12) sont sensiblement égales l'une à l'autre.

4. Fil selon l'une quelconque des revendications 1 à 3, dans lequel l'épaisseur de la couche (12) est de 1,3 à 8,4 % de l'épaisseur du matériau de gainage (1).

5. Fil selon l'une quelconque des revendications 1 à 4, dans lequel la couche (11) est formée pour être soudée à une surface d'une couche de Ni (21b, 22b) de la borne d'une batterie comprenant la couche de Ni.

6. Utilisation d'un matériau de gainage (1) comprenant :
- une première couche de Ni (11) agencée sur un côté soudé à la borne de la batterie ;
- une seconde couche de Ni (12) agencée sur un côté opposé au côté soudé ; et
- une couche de Fe (10) agencée de sorte à être retenue entre les couches (11) et (12), dans laquelle l'épaisseur de la couche (11) est de 3,1 à 7,5 % de l'épaisseur du matériau de gainage constitué des couches (10) à (12),
pour un fil soudé à une borne (21, 22) d'une batterie (2).

7. Utilisation selon la revendication 6, dans laquelle l'épaisseur de la couche (11) est de 2,1 à 20,5 µm.

8. Utilisation selon la revendication 6 ou 7, dans laquelle l'épaisseur de la couche (11) et l'épaisseur de la couche (12) sont sensiblement égales l'une à l'autre.

9. Utilisation selon l'une quelconque des revendications 6 à 8, dans laquelle l'épaisseur de la couche (12) est de 1,3 à 8,4% de l'épaisseur du matériau de gainage (1).

10. Utilisation selon l'une quelconque des revendications 6 à 9, dans laquelle la couche (11) est formée pour être soudée à une surface d'une couche de Ni (21b, 22b) de la borne d'une batterie comprenant la couche de Ni.

11. Procédé de soudage d'un matériau de gainage pour un fil par soudage par résistance d'un matériau de gainage (1) comprenant une première couche de Ni (11), une seconde couche de Ni (12) et une couche de Fe (10) agencée pour être retenue entre les couches (11) et (12), dans lequel l'épaisseur de la couche (11) est de 3,1 à 7,5 % de l'épaisseur du matériau de gainage constitué des couches (10) à (12), à une borne (21, 22) d'une batterie (2), comprenant les étapes :
- d'agencement du matériau de gainage (1) sur la borne d'une batterie (2) de sorte que la couche (11) soit positionnée sur le côté de la borne de la batterie ; et
- de soudage par résistance de la couche (11) à la borne de la batterie par alimentation électrique d'une électrode (4a) pour soudage par résistance dans un état d'agencement de l'électrode sur le côté de la couche (12).
